# FASCICULE DE BREVET EUROPEEN

(11) **EP 4 177 497 B1**
(45) Date de publication et mention de la délivrance du brevet: **27.11.2024**
(21) Numéro de dépôt: 22204556.9
(22) Date de dépôt: 28.10.2022
(51) Int. Cl.: F16H 63/34

(54) **MÉCANISME DE BLOCAGE**
VERRIEGELUNGSMECHANISMUS
BLOCKING MECHANISM

(30) Priorité: 04.11.2021 FR 2111747
(43) Date de publication de la demande: 10.05.2023
(73) Titulaire: VALEO EMBRAYAGES, 80009 Amiens (FR)
(72) Inventeur: CHERON, Antonin, 80000 Amiens (FR); DIASCORN, Fabien, 80000 Amiens (FR); MOLLIER, Christophe, 80009 AMIENS (FR)
(74) Mandataire: Valeo Powertrain Systems

(56) Documents cités:
- EP-A1- 3 670 973
- WO-A1-2019/001642
- DE-A1- 102018 131 099

## Description

### Domaine technique

La présente invention concerne un mécanisme de blocage pour le blocage en rotation d'un arbre d'une chaîne de transmission d'un appareil de mobilité, tel qu'un véhicule automobile par exemple.

### Arrière-plan technologique

Des mécanismes de blocage sont utilisés, par exemple, comme frein de stationnement afin de sécuriser un véhicule automobile à l'arrêt. Dans un tel cas, ils permettent de bloquer en rotation un arbre de transmission du véhicule automobile. De tels mécanismes de blocage sont notamment utilisés dans les véhicules automobiles à transmission automatique, dans les véhicules hybrides ou les véhicules électriques.

Lors de l'actionnement du mécanisme de blocage, ses composants sont susceptibles d'être soumis à des efforts importants. Ainsi, les composants du mécanisme de blocage doivent être en mesure de reprendre des forces importantes afin d'assurer la fiabilité du blocage.

Il est connu des mécanismes de blocage comprenant un cliquet équipé d'un doigt de verrouillage et monté pivotant sur un carter de transmission entre une position libérée et une position de verrouillage dans laquelle le doigt de verrouillage est inséré dans un évidement de verrouillage solidaire en rotation de l'arbre de transmission à bloquer. Le mécanisme de blocage comporte en outre un actionneur qui déplace un chariot mobile qui est guidé en rotation sur le carter de transmission au moyen d'un rail de guidage. Le chariot mobile comporte un galet qui coopère avec une surface de came du cliquet de sorte qu'un mouvement de translation du chariot mobile entraîne le pivotement du cliquet. Le rail de guidage est une pièce de tôle emboutie. Il comporte, d'une part, une surface de fixation qui est fixée au moyen d'organes de fixation, tels que des vis, contre une surface du carter de transmission et d'autre part, une surface de guidage contre laquelle roule le galet du chariot mobile et qui est sensiblement perpendiculaire à la surface de fixation. Or, compte-tenu des tolérances de fabrication du rail de guidage, l'angle formé entre la surface de fixation et la surface de guidage est susceptible de varier autour de 90°. En outre, un tel rail de guidage a tendance à se déformer sous les différentes contraintes mécaniques. Or, il est important de garantir un positionnement précis de la surface de guidage du rail de guidage par rapport au cliquet afin, d'une part, de garantir la fiabilité du blocage et, d'autre part, éviter que des efforts trop importants transitent par le mécanisme de blocage et ne soient ainsi susceptibles de l'endommager.

Le document EP 3 670 973 A1 divulgue un mécanisme de blocage.

Ainsi, il est nécessaire de proposer un mécanisme de blocage qui soit fiable, économique, facile à mettre en oeuvre et supporte des charges élevées.

### Résumé

Une idée à la base de l'invention est un mécanisme de blocage destiné à bloquer en rotation un arbre d'un véhicule.

Une idée à la base de l'invention est un mécanisme de blocage qui permet de résoudre un ou plusieurs problèmes techniques de l'art antérieur, par exemple les problèmes susmentionnés.

L'invention concerne un mécanisme de blocage destiné à bloquer en rotation un arbre d'un véhicule équipé d'au moins un évidement de verrouillage, le mécanisme de blocage comprenant :
- un carter de transmission ;
- un cliquet mobile comprenant un doigt de verrouillage, le cliquet mobile étant monté pivotant dans un plan autour d'un axe de pivotement sur le carter de transmission entre une position de verrouillage dans laquelle le doigt de verrouillage est apte à être engagé dans l'évidement de verrouillage et une position libérée dans laquelle le doigt de verrouillage est apte à être désengagé dudit évidement de verrouillage, le cliquet mobile comprenant une surface de came,
- un actionneur linéaire,
- un chariot mobile, et
- un rail de guidage, l'actionneur linéaire étant apte à déplacer le chariot mobile qui est guidé par le rail de guidage, dans lequel le chariot mobile comporte un suiveur de came apte à se déplacer sur la surface de came afin de déplacer le cliquet mobile de la position libérée vers la position de verrouillage,
- un logement formé dans le carter de transmission,
dans lequel le rail de guidage est emboité dans le logement afin d'empêcher un déplacement du rail de guidage dans le plan.

Grâce à ces caractéristiques, le rail de guidage est maintenu dans le logement tout en évitant de se déformer lorsque le mécanisme de blocage passe d'une position libérée à une position de verrouillage ou inversement. En effet, le logement reprend les efforts exercés par le chariot mobile sur le rail de guidage. Ainsi, un positionnement relatif précis du rail de guidage est assuré.

Le logement peut être usiné dans des dimensions choisies de manière à fixer le rail de guidage et à empêcher un déplacement dudit rail de guidage selon toutes les directions du plan.

Le terme « logement usiné » doit être interprété au sens de l'invention comme réalisé par un enlèvement de matière ménagé dans le carter de transmission.

Selon un mode de réalisation, le logement présente une première paroi latérale en vis-à-vis et distante d'une deuxième paroi latérale et une première paroi longitudinale située entre la première paroi latérale et la deuxième paroi latérale,
dans lequel le rail de guidage présente de manière correspondante au logement une première paroi latérale en vis-à-vis et distante d'une deuxième paroi latérale et une première paroi longitudinale située entre la première paroi latérale et la deuxième paroi latérale,
et dans lequel la première paroi latérale, la deuxième paroi latérale et la première paroi longitudinale du rail de guidage sont respectivement en contact avec la première paroi latérale, la deuxième paroi latérale et la première paroi longitudinale du logement.

Selon un mode de réalisation, le logement présente une deuxième paroi longitudinale en vis-à-vis et distante de la première paroi longitudinale du logement, et dans lequel le rail de guidage présente une deuxième paroi longitudinale en vis-à-vis et distante de la première paroi longitudinale du rail de guidage.

Le rail de guidage peut comporter exclusivement la première paroi latérale, la deuxième paroi latérale, la première paroi longitudinale.

Le rail de guidage peut comporter exclusivement la première paroi latérale, la deuxième paroi latérale, la première paroi longitudinale et la deuxième paroi longitudinale. C'est-à-dire que le rail de guidage ne comporte pas un fond ou un plafond.

Toutes les parois du rail de guidage peuvent être perpendiculaires au plan.

La première paroi latérale, la deuxième paroi latérale, la première paroi longitudinale et/ou deuxième première paroi longitudinale du rail de guidage peut présenter une épaisseur comprise entre 1.5mm et 3.5mm; de préférence entre 2.5 et 3mm.

Selon un mode de réalisation, le logement présente une ouverture et le rail de guidage présente une ouverture, l'ouverture du logement et l'ouverture du rail de guidage étant traversantes.

L'ouverture du logement peut être aménagée dans au moins une paroi choisie parmi : la première paroi latérale, la deuxième paroi latérale, la première paroi longitudinale et deuxième paroi longitudinale, du logement, préférentiellement dans la deuxième paroi longitudinale.

L'ouverture du rail de guidage Peut être aménagée dans au moins une paroi choisie parmi : la première paroi latérale, la deuxième paroi latérale, la première paroi longitudinale et deuxième paroi longitudinale, du rail de guidage, préférentiellement dans la deuxième paroi longitudinale.

L'ouverture du logement et l'ouverture du rail de guidage peuvent être en vis-à-vis.

Selon un mode de réalisation, le logement présente une encoche et le rail de guidage présente une encoche, l'encoche du logement et l'encoche du rail de guidage sont traversantes et sont destinées à permettre le passage de l'actionneur linéaire.

L'encoche peut être choisie parmi : un évidement, une découpe, un trou oblong, une rainure ou une fente.

L'encoche de logement peut être située sur la première paroi latérale du logement et l'encoche du rail de guidage est située sur la première paroi latérale du rail de guidage.

Le logement peut présenter une hauteur comprise entre 15mm et 30mm.

Selon un mode de réalisation, le suiveur de came comporte un galet mobile apte à se déplacer sur la surface de came au niveau de l'ouverture du logement et de l'ouverture du rail de guidage.

Grâce à ces caractéristiques, lorsque le chariot mobile est en mouvement relatif par rapport au rail de guidage, les forces de frottement entre le chariot mobile et le rail de guidage sont diminués. Ainsi le déplacement du chariot mobile est assuré sans usure du chariot mobile ou du rail de guidage.

Le chariot mobile peut comprendre un deuxième galet mobile apte à se déplacer le long de la première paroi longitudinale du rail de guidage.

Selon un mode de réalisation, le rail de guidage comprend une butée anti-retour empêchant le déplacement du chariot mobile au-delà dudit rail de guidage.

Grâce à ces caractéristiques, le chariot mobile est maintenu dans le logement.

Selon un mode de réalisation, la butée anti-retour est réalisée par la première paroi latérale du rail de guidage.

Selon un mode de réalisation, un moyen de fixation fixe le rail de guidage sur le carter de transmission, le moyen de fixation fixant le rail de guidage selon une direction perpendiculaire au plan.

Selon un mode de réalisation, le moyen de fixation est choisi parmi : une vis, un système vis écrou ou une matière adhésive.

Selon un mode de réalisation, le rail de guidage est formé d'un seul tenant dans une bande de matériau métallique pliée.

L'invention concerne également un système de transmission comprenant un arbre équipé d'au moins un évidement de verrouillage et un mécanisme de blocage tel que défini précédemment.

L'arbre peut comprendre une roue comportant le au moins un évidement de verrouillage. Par exemple, la roue est une roue à rochet.

La roue peut comporter 1 à 12 évidements de verrouillage. La pluralité d'évidement peuvent être régulièrement espacés les uns des autres.

L'invention concerne en outre un véhicule automobile comprenant un système de transmission tel que défini précédemment.

### Brève description des figures

[Fig. 1] La figure 1 est une vue de face d'une portion d'un carter de transmission comprenant un logement pour le rail de guidage selon un mode de réalisation.
[Fig. 2] La figure 2 est une vue en perspective de la figure 1.
[Fig. 3] La figure 3 est une vue de face d'une portion d'un carter de transmission comprenant un logement et un rail de guidage selon un mode de réalisation.
[Fig. 4] La figure 4 est une vue en perspective de la figure 3.
[Fig. 5] La figure 5 est une vue en perspective du rail de guidage illustré sur les figures 3 et 4.
[Fig. 6] La figure 6 est une vue de face d'une portion d'un carter de transmission comprenant le mécanisme de blocage selon un mode de réalisation.
[Fig. 7] La figure 7 est une vue en perspective de la figure 6.
[Fig. 8] La figure 8 est une vue en perspective d'un rail de guidage selon un autre mode de réalisation.
[Fig. 9] La figure 9 est une vue en perspective d'un rail de guidage selon un autre mode de réalisation.
[Fig. 10] La figure 10 est une vue en perspective d'un rail de guidage comprenant un moyen de fixation selon un mode de réalisation.
[Fig. 11] La figure 11 est une vue en perspective d'un arbre d'un véhicule bloqué en rotation.

### Description des modes de réalisation

Le mécanisme de blocage en rotation d'un arbre d'un véhicule comprend notamment : un cliquet mobile, un actionneur linéaire, un chariot mobile, un rail de guidage et un logement. Le mécanisme de blocage est notamment destiné à immobiliser un véhicule, par exemple une voiture, dans un état stationné.

Les différents éléments du mécanisme de guidage selon différentes variantes de réalisation seront présentés ci-dessous.

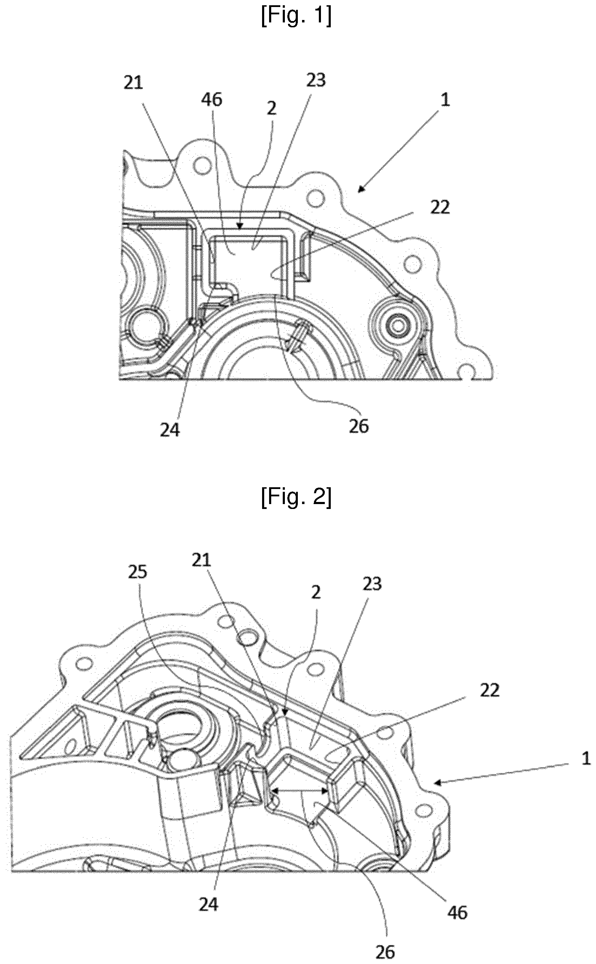

Les figures 1 et 2 illustrent un carter de transmission 1 comprenant un logement 2 du mécanisme de blocage d'un véhicule.

Le logement 2 est formé dans le carter de transmission 1, c'est-à-dire que le logement n'est pas une pièce détachée qui est fixée sur le carter de transmission 1. En effet, le logement 2 est creusé ou fabriqué directement dans l'épaisseur d'une paroi du carter de transmission 1.

Le logement 2 présente une forme générale rectangulaire avec les arrêtes arrondies et comprend une première paroi latérale 21 en vis-à-vis et distante d'une deuxième paroi latérale 22, une première paroi longitudinale 23 en vis-à-vis et distante d'une deuxième paroi longitudinale 24, ainsi qu'une paroi de fond 46.

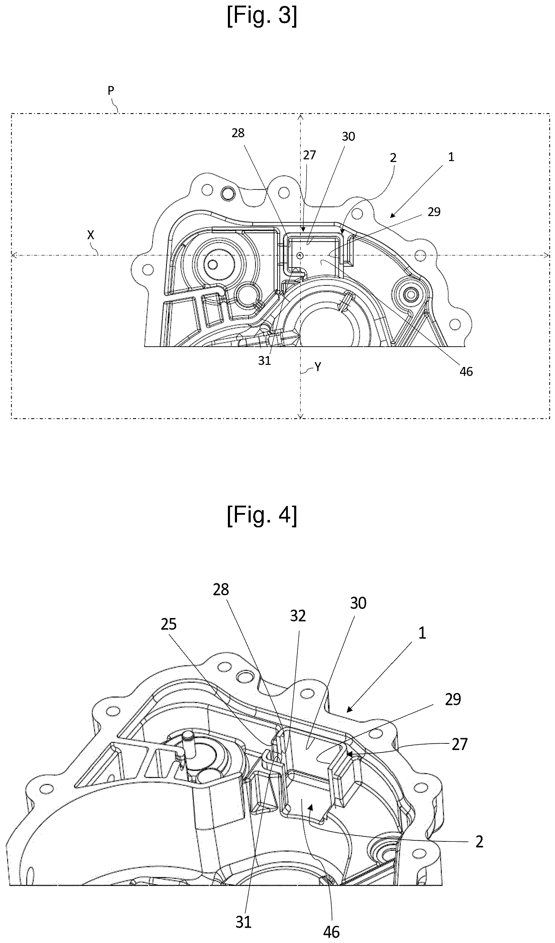

Le logement 2 est destiné à loger et fixer un rail de guidage, illustré notamment sur les figures 3, 4 et 5.

Les figures 3 et 4 illustrent une portion d'un carter de transmission 1 comprenant le logement 2 tel que présenté dans les figures 1 et 2 et illustre en outre un rail de guidage 27 logé dans le logement 2.

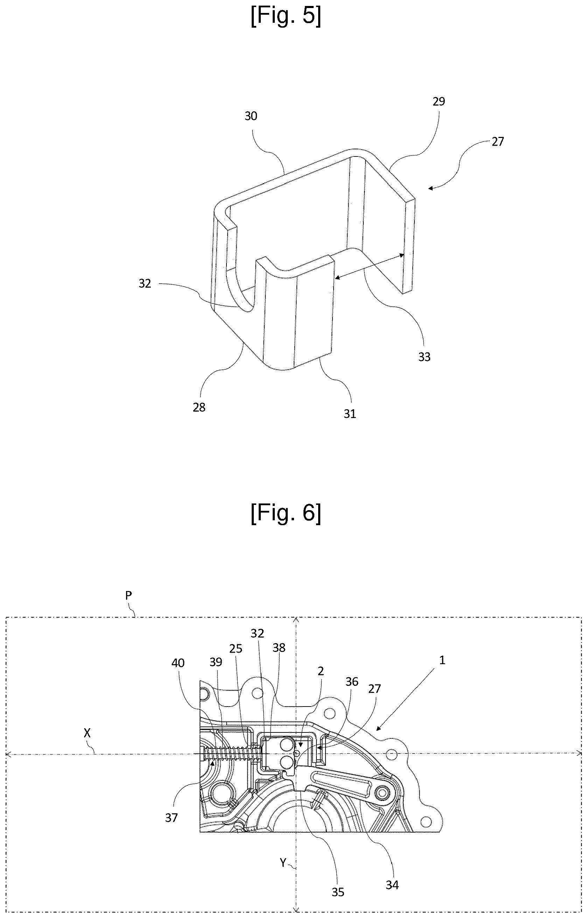

Le rail de guidage 27 présente des dimensions similaires au logement 2 afin d'être emboité dans le logement 2 de manière fixe, c'est-à-dire que le rail de guidage 27 épouse le contour du logement 2. Ainsi le rail de guidage est maintenu en position statique dans le logement 2 dans un plan P comprenant une direction longitudinale X et une direction transversale Y à la direction longitudinale X et, dans une direction orthogonale O au plan, en direction de la paroi de fond 46. Cette disposition est particulièrement avantageuse car les différents efforts de pressions exercés sur le rail de guidage 27 sont repris par les parois du logement 2 et donc par le carter de transmission 1. Cet agencement permet de conserver les dimensions du rail de guidage 27, sans déformation et donc sans détérioration au cours du temps. Un tel rail de guidage est notamment illustré sur la figure 5.

De manière analogue au logement 2 tel qu'illustré sur les figures 1 et 2, le rail de guidage 27 illustré figure 5 présente une première paroi latérale 28 en vis-à-vis et distante d'une deuxième paroi latérale 29 ainsi qu'une première paroi longitudinale 30 en vis-à-vis et distante d'une deuxième paroi longitudinale 31.

Les première 28 et deuxième 29 parois latérales ainsi que lesdites première 30 et deuxième 31 parois longitudinales du rail de guidage 27 sont respectivement en contact avec les première 21, deuxième 22 parois latérales et, les première 23 et deuxième 24 parois longitudinales du logement 2.

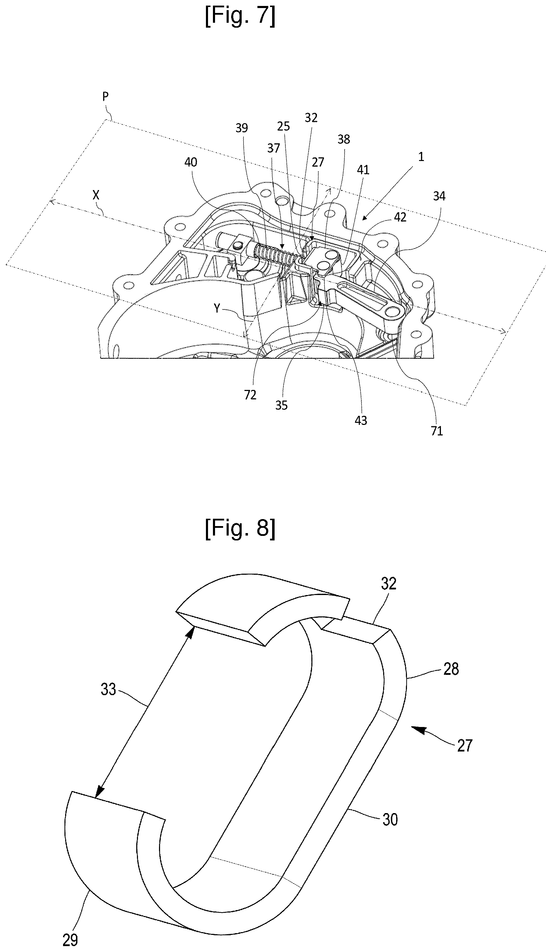

En outre, la première paroi latérale 21 du logement 2 comprend une encoche 25 destinée à permettre le passage d'un actionneur linéaire qui est illustré sur les figures 6 et 7. L'encoche 25 présente une forme de « U ».

La première paroi latérale 28 du rail de guidage 27 comprend une encoche 32 ayant une forme correspondant à celle de l'encoche 25 du logement 2, comme illustrée sur la figure 4. L'encoche 32 est destinée à permettre le passage d'un actionneur linéaire qui est présenté sur les figures 6 et 7.

La deuxième paroi latérale 22 et la deuxième paroi longitudinale 24 du logement 2 présente une ouverture 26 commune autorisant un contact entre un chariot mobile situé dans le logement 2, illustré sur les figures 6 et 7, et un cliquet mobile situé au niveau de l'ouverture 26, illustré sur les figures 6, 7 et 11.

La deuxième paroi longitudinale 31 et la deuxième paroi latérale 29 du rail de guidage 27 présentent une ouverture 33 commune en communication avec l'ouverture 26 du logement 2.

La première paroi latérale 28 du rail de guidage 27 est une butée anti-retour pour le chariot mobile 38, illustré figures 6 et 7, afin que le chariot mobile soit retenu en translation dans le logement 2, par le rail de guidage 27.

Le rail de guidage 27 sert au guidage du chariot mobile et prévoit qu'il n'effectue que le mouvement de translation nécessaire à l'actionnement d'un doigt de verrouillage dans un évidement de verrouillage afin que le mécanisme de blocage soit dans une position de verrouillage. La position de verrouillage permet par exemple le stationnement d'un véhicule automobile.

Le rail de guidage est fabriqué par exemple à partir d'une bande de matériau métallique qui est d'une part découpée afin de former l'encoche puis pliée trois fois dans le sens de la longueur afin de former lesdites parois qui le compose. La bande métallique présente une forme rectangulaire avant d'être pliée. La bande métallique avant pliage peut comprendre également une encoche destinée à former l'encoche du rail de guidage.

Les figures 6 et 7 représentent une vue partielle d'un mécanisme de blocage en rotation d'un arbre dans une position libérée.

Le mécanisme de blocage comprend le logement 2 tel que décrit dans les figures 1 à 4 et le rail de guidage 27 tel que décrit dans les figures 3 à 5. Le mécanisme de blocage comprend en outre un cliquet mobile 34 situé dans le carter de transmission 1.

Le cliquet mobile 34 est de forme allongée et présente une première extrémité 71 et une deuxième extrémité 72 distante de la première extrémité 71.

La première extrémité 71 permet la fixation du cliquet mobile 34 sur le carter de transmission 1 tout en permettant le mouvement en rotation dudit cliquet mobile 34. C'est-à-dire que le cliquet mobile est monté pivotant dans un plan P autour d'un axe de pivotement.

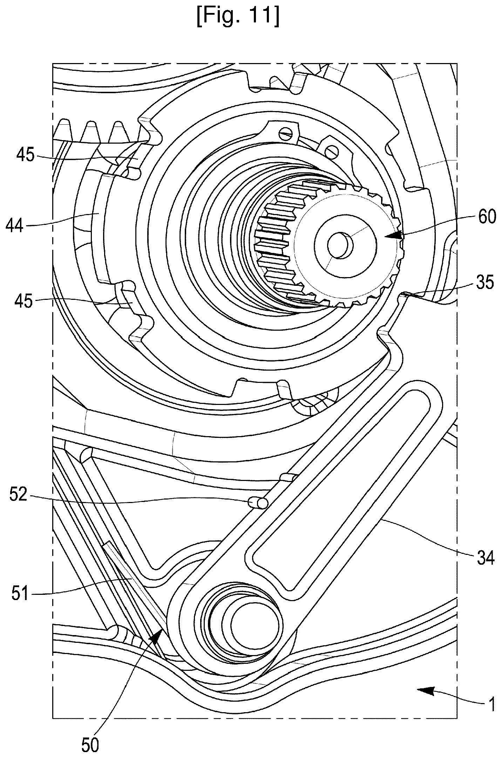

La deuxième extrémité 72 est située au niveau de l'ouverture 33 du rail de guidage 27 et de l'ouverture 26 du logement. La deuxième extrémité 72 comprend une surface de came 36 située sur une première face latérale du cliquet mobile 34, en direction de l'intérieur du logement 2. La deuxième extrémité 72 comprend en outre un doigt de verrouillage 35 faisant sailli vers l'extérieur du logement 2 depuis une deuxième face latérale du cliquet mobile 34. Le doigt de verrouillage 35 est destiné, lorsque le mécanisme de blocage est enclenché, à s'insérer dans un évidement de verrouillage, représenté sur la figure 11. L'évidement de verrouillage est par exemple situé sur une roue à rochet 44 qui est apte à recevoir ledit doigt de verrouillage 35, comme illustré sur la figure 11 et qui est fixée solidaire en rotation de l'arbre 60 de transmission à bloquer en rotation.

Selon une variante présentée sur la figure 11, le cliquet mobile 34 comprend en outre un ressort de torsion 50. Le ressort de torsion 50 est enroulé au niveau de la première extrémité 71 du cliquet mobile 34. Le ressort de torsion 50 comprend une première portion d'extrémité 51 qui est en appui contre une surface d'appui du carter de transmission et une deuxième portion d'extrémité 52 qui est en appui contre une surface d'appui du cliquet mobile 34. Le ressort de torsion 50 est agencé pour exercer un effort de rappel sur le cliquet mobile 34 afin de le rappeler vers la position libérée. Le mécanisme de blocage comprend en outre un actionneur linéaire 37, représenté partiellement sur la figure 6, qui est fixé au carter de transmission 1. L'actionneur linéaire 37 comprend une tige 39 apte à se déplacer selon la direction longitudinale X.

La tige 39 se développe à travers l'encoche 25 du logement 2 et l'encoche 32 du rail de guidage 27 jusque dans un espace interne du logement 2. La tige 39 est fixé au chariot mobile 38 situé dans le logement 2.

Le chariot mobile 38 est destiné à être guidé par le rail de guidage 27.

Dans les cas où le chariot mobile 38 est renvoyé en arrière par le cliquet mobile 34 lors de phase dynamique le chariot mobile 38 vient en butée contre la première paroi latérale 28 du rail de guidage 27, qui forme ainsi une buté-anti-retour pour le chariot mobile 38. Le chariot mobile 38, est dans ce cas envoyé contre le cliquet mobile 34 par une force de rappel exercée par un ressort de traction 40 qui entoure la tige 39 et qui comporte une première extrémité fixée au corps de l'actionneur et une deuxième extrémité fixée au chariot mobile 38. Cet effet peut se produire par exemple lors de tentative d'engagement à trop haute vitesse. Au-delà d'une vitesse seuil, par exemple comprise entre 3km/h et 5km/h, le cliquet mobile 34 rebondit pour empêcher l'engagement, le chariot mobile 38 est alors renvoyé en butée.

Le chariot mobile 38 comprend en outre un premier galet mobile 41 apte à se déplacer le long de la première paroi longitudinale 30 du rail de guidage 27. Le chariot mobile 38 comprend en outre un suiveur de came 42 comportant un deuxième galet mobile qui est en contact avec la surface de came 36 du cliquet mobile 34 et apte à se déplacer le long de cette surface de came 36.

Le chariot mobile 38 comprend en outre un ergot 43 situé au niveau de la deuxième extrémité du cliquet mobile 34. L'ergot 43 est destiné à retenir le cliquet mobile 34 dans le plan P.

Pour déplacer le cliquet mobile 34 dans la position de verrouillage, la tige 39 de l'actionneur linéaire 37 est déplacée à travers l'encoche 32 du rail de guidage 27 déplaçant ainsi le chariot mobile 38 selon une direction longitudinale. Le chariot mobile 38 est déplacé depuis la première paroi latérale 28 du rail de guidage 27, en direction de la deuxième paroi latérale 29. Le déplacement du chariot mobile 38 entraine le déplacement du premier galet mobile 41 le long de la première paroi longitudinale 30 du rail de guidage 27 et le déplacement du suiveur de came 42 le long de la surface de came 36 du cliquet mobile 34. La surface de came 36 présente une pente et le chariot mobile 38 exerce donc via son déplacement, une pression en direction de la surface de came 36 du cliquet mobile 34. Cette pression engendre un déplacement en rotation de la deuxième extrémité du cliquet mobile 34 en direction d'un évidement de verrouillage de telle sorte que le doigt de verrouillage 35 s'engage dans un évidement de verrouillage présent par exemple sur une roue à rochet telle qu'illustrée figure 11 afin de verrouiller ladite roue à rochet 44.

La figure 11 illustre un carter de transmission 1 comprenant une roue à rochet 44. La roue à rochet 44 présente une pluralité d'évidements 45 régulièrement espacés les uns des autres, sur tout le tour de la roue à rochet 44. Chaque évidement 45 de la pluralité d'évidements présente des dimensions permettant de recevoir le doigt de verrouillage 35 du cliquet mobile 34. La figure 11 illustre en outre un arbre 60 d'un véhicule qui est bloqué en rotation par le mécanisme de blocage.

Pour le déplacement du mécanisme de blocage de la position de verrouillage à la position libérée, la tige 39 est déplacée de manière à déplacer le chariot mobile 38 en direction de la première paroi latérale 28 jusqu'à ce qu'il vienne en butée contre la première paroi latérale 28 du rail de guidage 27. Le doigt de verrouillage 35 est dégagé de l'évidement de verrouillage présent sur la roue à rochet 44 ce qui libère ladite roue à rochet et autorise ainsi la rotation de l'arbre 60 de transmission.

Les figures 8 à 10 illustrent des rails de guidage 27 selon plusieurs modes de réalisation, destinés à être emboités dans des logements du carter de transmission.

La figure 8 illustre un rail de guidage 27 destiné à être emboité dans un logement formé dans le carter de transmission. Le rail de guidage 27 présente des dimensions similaires au logement de manière à être maintenu dans le logement 2 par coopération de forme entre les parois du logement et les parois du rail de guidage 27. En ce sens, le rail de guidage 27 présente une première paroi latérale 28 en vis-à-vis et distante d'une deuxième paroi latérale 29 et une première paroi longitudinale 30 située entre la première paroi latérale 28 et la deuxième paroi latérale 29. La première paroi latérale 28 et la deuxième paroi latérale 29 sont recourbées. La première paroi latérale 28 du rail de guidage 27 comprend une encoche 32.

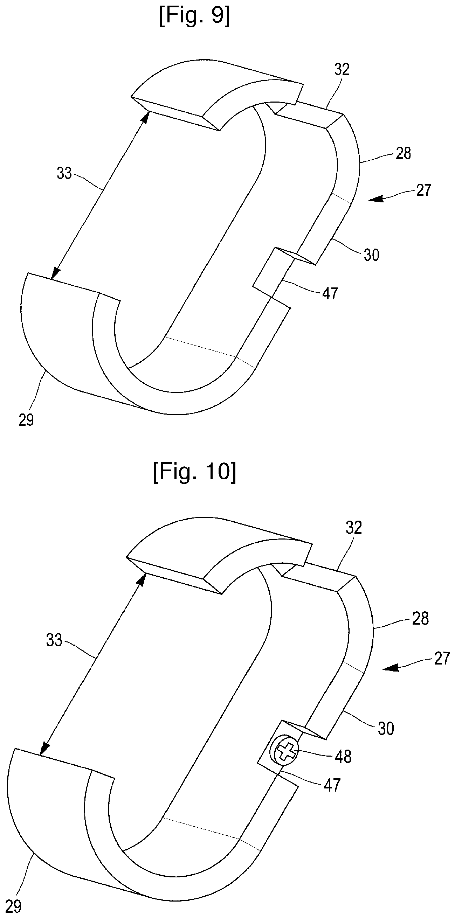

Les figures 9 et 10 illustrent un rail de guidage comprenant en outre une rainure 47 située en bordure de la première paroi longitudinale 30.

La rainure 47 reçoit un moyen de fixation 48, par exemple une vis, destinée à fixer le rail de guidage 27 dans une direction orthogonale O à la direction longitudinale de la première paroi longitudinale 30.

Le logement destiné à recevoir le rail de guidage des figures 8 à 10 présente des dimensions permettant de recevoir par emboitement le rail de guidage 27. Le logement présente ainsi quatre parties, à savoir : un fond, une première paroi latérale en vis-à-vis et distante d'une deuxième paroi latérale et une première paroi longitudinale située entre la première paroi latérale et la deuxième paroi latérale. La première paroi latérale et la deuxième paroi latérale sont respectivement recourbées en forme de demi-cercle complémentaire l'un de l'autre, de manière à épouser les première et deuxième parois latérales du rail de guidage. La première paroi longitudinale du logement est en vis-à-vis d'une ouverture formée par la distance entre la première paroi latérale et la deuxième paroi latérale.

Bien que l'invention ait été décrite en liaison avec plusieurs modes de réalisation particuliers, il est bien évident qu'elle n'y est nullement limitée est définie par les revendications.

L'usage du verbe « comporter », « comprendre » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Mécanisme de blocage destiné à bloquer en rotation un arbre d'un véhicule équipé d'au moins un évidement de verrouillage (45), le mécanisme de blocage comprenant :
- un carter de transmission (1) ;
- un cliquet mobile (34) comprenant un doigt de verrouillage (35), le cliquet mobile (34) étant monté pivotant dans un plan autour d'un axe de pivotement sur le carter de transmission (1) entre une position de verrouillage dans laquelle le doigt de verrouillage (35) est apte à être engagé dans l'évidement de verrouillage (45) et une position libérée dans laquelle le doigt de verrouillage (35) est apte à être désengagé dudit évidement de verrouillage (45), le cliquet mobile (34) comprenant une surface de came (36),
- un actionneur linéaire (37),
- un chariot mobile (38), et
- un rail de guidage (27), l'actionneur linéaire étant apte à déplacer le chariot mobile (38) qui est guidé par le rail de guidage,
dans lequel le chariot mobile (38) comporte un suiveur de came apte à se déplacer sur la surface de came (36) afin de déplacer le cliquet mobile de la position libérée vers la position de verrouillage,
**caractérisé en ce qu'**un logement (2) est formé dans le carter de transmission (1), dans lequel le rail de guidage (27) est emboité dans le logement (2) afin d'empêcher un déplacement du rail de guidage (27) dans le plan.

2. Mécanisme de blocage selon la revendication 1, dans lequel le logement (2) présente une première paroi latérale (21) en vis-à-vis et distante d'une deuxième paroi latérale (22) et une première paroi longitudinale (23) située entre la première paroi latérale (21) et la deuxième paroi latérale (22),
dans lequel le rail de guidage (27) présente de manière correspondante au logement (2) une première paroi latérale (28) en vis-à-vis et distante d'une deuxième paroi latérale (29) et une première paroi longitudinale (30) située entre la première paroi latérale (28) et la deuxième paroi latérale (29),
et dans lequel la première paroi latérale (28), la deuxième paroi latérale (29) et la première paroi longitudinale (30) du rail de guidage (27) sont respectivement en contact avec la première paroi latérale (21), la deuxième paroi latérale (22) et la première paroi longitudinale (23) du logement (2).

3. Mécanisme de blocage selon la revendication 2, dans lequel le logement (2) présente une deuxième paroi longitudinale (24) en vis-à-vis et distante de la première paroi longitudinale (23) du logement (2), et dans lequel le rail de guidage (27) présente une deuxième paroi longitudinale (31) en vis-à-vis et distante de la première paroi longitudinale (30) du rail de guidage (27).

4. Mécanisme de blocage selon l'une des revendications 1 à 3, dans lequel le logement présente une ouverture (26) et dans lequel le rail de guidage (27) présente une ouverture (33), l'ouverture (26) du logement (2) et l'ouverture (33) du rail de guidage (27) sont traversantes.

5. Mécanisme de blocage selon la revendication 4, dans lequel le suiveur de came comporte un galet mobile (42) apte à se déplacer sur la surface de came (36) au niveau de l'ouverture (26) du logement (2) et de l'ouverture (33) du rail de guidage (27).

6. Mécanisme de blocage selon l'une des revendications 1 à 5, dans lequel le logement présente une encoche (25) et, dans lequel le rail de guidage présente une encoche (32), l'encoche du logement (25) et l'encoche (32) du rail de guidage sont traversantes et sont destinées à permettre le passage de l'actionneur linéaire (37).

7. Mécanisme de blocage selon l'une des revendications 1 à 6 dans lequel le rail de guidage (27) comprend une butée anti-retour (28) empêchant le déplacement du chariot mobile (38) au-delà dudit rail de guidage (27).

8. Mécanisme de blocage selon l'une des revendications 2 à 7 en combinaison avec la revendication 6, dans lequel la butée anti-retour est réalisée par la première paroi latérale (28) du rail de guidage (27).

9. Mécanisme de blocage selon l'une des revendications 1 à 8, dans lequel un moyen de fixation fixe le rail de guidage (27) sur le carter de transmission (1), le moyen de blocage bloque un mouvement du rail de guidage selon une direction perpendiculaire au plan.

10. Mécanisme de blocage selon l'une des revendications 1 à 9, dans lequel le rail de guidage est formé d'un seul tenant dans une bande de matériau métallique pliée.

11. Système de transmission comprenant un arbre équipé d'au moins un évidement de verrouillage (45) et un mécanisme de blocage selon l'une quelconque des revendications 1 à 10.

12. Véhicule automobile comprenant un système de transmission selon la revendication 11.

## Patentansprüche

1. Verriegelungsmechanismus zum Verriegeln einer Welle eines Fahrzeugs gegen Drehung, der mit mindestens einer Sperraussparung (45) ausgestattet ist, wobei der Verriegelungsmechanismus umfasst:
- ein Getriebegehäuse(1);
- eine bewegliche Klinke (34), umfassend einen Sperrfinger (35), wobei die bewegliche Klinke (34) in einer Ebene um eine Schwenkachse an dem Getriebegehäuse (1) zwischen einer Sperrposition, in der der Sperrfinger (35) geeignet ist, in die Sperraussparung (45) einzugreifen, und einer freigegebenen Position, in der der Sperrfinger (35) geeignet ist, aus der Sperraussparung (45) gelöst zu werden, schwenkbar angebracht ist, wobei die bewegliche Klinke (34) eine Nockenoberfläche (36) umfasst,
- einen linearen Steller (37),
- einen beweglichen Schlitten (38) und
- eine Führungsschiene (27), wobei der lineare Steller geeignet ist, den beweglichen Schlitten (38) zu bewegen, der von der Führungsschiene geführt wird,
wobei der bewegliche Schlitten (38) einen Nockenfolger aufweist, der geeignet ist, sich auf der Nockenoberfläche (36) zu bewegen, um die bewegliche Klinke aus der freigegebenen Position in die Sperrposition zu bewegen, **dadurch gekennzeichnet, dass** in dem Getriebegehäuse (1) eine Aufnahme (2) gebildet ist, wobei die Führungsschiene (27) in die Aufnahme (2) eingepasst ist, um eine Bewegung der Führungsschiene (27) in der Ebene zu verhindern.

2. Verriegelungsmechanismus nach Anspruch 1, wobei die Aufnahme (2) eine erste Seitenwand (21), die einer zweiten Seitenwand (22) gegenüberliegt und von dieser beabstandet ist, und eine erste Längswand (23) darstellt, die sich zwischen der ersten Seitenwand (21) und der zweiten Seitenwand (22) befindet,
wobei die Führungsschiene (27) entsprechend der Aufnahme (2) eine erste Seitenwand (28), die einer zweiten Seitenwand (29) gegenüberliegt und von dieser beabstandet ist, und eine erste Längswand (30) darstellt, die sich zwischen der ersten Seitenwand (28) und der zweiten Seitenwand (29) befindet,
und wobei die erste Seitenwand (28), die zweite Seitenwand (29) und die erste Längswand (30) der Führungsschiene (27) jeweils in Kontakt mit der ersten Seitenwand (21), der zweiten Seitenwand (22) und der ersten Längswand (23) der Aufnahme (2) sind.

3. Verriegelungsmechanismus nach Anspruch 2, wobei die Aufnahme (2) eine zweite Längswand (24) darstellt, die der ersten Längswand (23) der Aufnahme (2) gegenüberliegt und von dieser beabstandet ist, und wobei die Führungsschiene (27) eine zweite Längswand (31) darstellt, die der ersten Längswand (30) der Führungsschiene (27) gegenüberliegt und von dieser beabstandet ist.

4. Verriegelungsmechanismus nach einem der Ansprüche 1 bis 3, wobei die Aufnahme eine Öffnung (26) darstellt und wobei die Führungsschiene (27) eine Öffnung (33) darstellt, wobei die Öffnung (26) der Aufnahme (2) und die Öffnung (33) der Führungsschiene (27) durchgängig sind.

5. Verriegelungsmechanismus nach Anspruch 4, bei dem der Nockenfolger eine bewegliche Rolle (42) aufweist, die geeignet ist, sich auf der Nockenoberfläche (36) an der Öffnung (26) der Aufnahme (2) und der Öffnung (33) der Führungsschiene (27) zu bewegen.

6. Verriegelungsmechanismus nach einem der Ansprüche 1 bis 5, wobei die Aufnahme eine Kerbe (25) darstellt und wobei die Führungsschiene eine Kerbe (32) darstellt, wobei die Kerbe der Aufnahme (25) und die Kerbe (32) der Führungsschiene durchgängig sind und dazu dienen, den Durchgang des linearen Stellers (37) zu ermöglichen.

7. Verriegelungsmechanismus nach einem der Ansprüche 1 bis 6, bei dem die Führungsschiene (27) einen Rücklaufanschlag (28) umfasst, der verhindert, dass sich der bewegliche Schlitten (38) über die Führungsschiene (27) hinaus bewegt.

8. Verriegelungsmechanismus nach einem der Ansprüche 2 bis 7 in Verbindung mit Anspruch 6, wobei der Rücklaufanschlag durch die erste Seitenwand (28) der Führungsschiene (27) ausgeführt ist.

9. Verriegelungsmechanismus nach einem der Ansprüche 1 bis 8, wobei ein Befestigungsmittel die Führungsschiene (27) an dem Getriebegehäuse (1) befestigt, wobei das Verriegelungsmittel eine Bewegung der Führungsschiene in einer Richtung senkrecht zu der Ebene verriegelt.

10. Verriegelungsmechanismus nach einem der Ansprüche 1 bis 9, bei dem die Führungsschiene zusammenhängend aus einem gebogenen Streifen aus metallischem Material gebildet ist.

11. Getriebesystem, umfassend eine Welle, die mit mindestens einer Sperraussparung (45) versehen ist, und einen Verriegelungsmechanismus nach einem der Ansprüche 1 bis 10.

12. Kraftfahrzeug, umfassend ein Getriebesystem nach Anspruch 11.

## Claims

1. Blocking mechanism for rotationally blocking a shaft of a vehicle having at least one locking recess (45), the blocking mechanism comprising:
- a transmission casing (1);
- a movable pawl (34) comprising a locking finger (35), the movable pawl (34) being pivotably mounted in a plane about a pivot axis on the transmission casing (1) between a locking position in which the locking finger (35) is engaged in the locking recess (45) and a release position in which the locking finger (35) is disengaged from said locking recess (45), the movable pawl (34) comprising a cam surface (36),
- a linear actuator (37),
- a movable carriage (38), and
- a guide rail (27), the linear actuator being able to move the mobile carriage (38) which is guided by the guide rail,
in which the movable carriage (38) includes a cam follower capable of moving on the cam surface (36) so as to move the movable pawl from the release position into the locking position,
**characterized in that** a housing (2) is formed in the transmission casing (1), in which the guide rail (27) is fitted in the housing (2) so as to prevent movement of the guide rail (27) in the plane.

2. Blocking mechanism according to Claim 1, in which the housing (2) has a first side wall (21) facing and at a distance from a second side wall (22) and a first longitudinal wall (23) located between the first side wall (21) and the second side wall (22), in which the guide rail (27) has, corresponding to the housing (2), a first side wall (28) facing and at a distance from a second side wall (29) and a first longitudinal wall (30) located between the first side wall (28) and the second side wall (29),and in which the first side wall (28), the second side wall (29) and the first longitudinal wall (30) of the guide rail (27) are in contact , respectively, with the first side wall (21), the second side wall (22) and the first longitudinal wall (23) of the housing (2).

3. Blocking mechanism according to Claim 2, in which the housing (2) has a second longitudinal wall (24) facing and at a distance from the first longitudinal wall (23), and in which the guide rail (27) has a second longitudinal wall (31) facing and at a distance from the first longitudinal wall (30).

4. Blocking mechanism according to one of Claims 1 to 3, in which the housing has an opening (26) and in which the guide rail (27) has an opening (33), the opening (26) in the housing (2) and the opening (33) in the guide rail (27) being through openings.

5. Blocking mechanism according to Claim 4, in which the cam follower includes a movable roller (42) capable of moving on the cam surface (36) at the opening (26) in the housing (2) and at the opening (33) in the guide rail (27) .

6. Blocking mechanism according to one of Claims 1 to 5, in which the housing has a notch (25) and in which the guide rail has a notch (32), the notch (25) in the housing and the notch (32) in the guide rail are through notches and are intended to allow the passage of the linear actuator (37).

7. Blocking mechanism according to one of Claims 1 to 6, in which the guide rail (27) comprises a non-return stop (28) preventing the movable carriage (38) from moving beyond said guide rail (27).

8. Blocking mechanism according to one of Claims 2 to 7 in conjunction with Claim 6, in which the non-return stop is formed by the first side wall (28) of the guide rail (27).

9. Blocking mechanism according to one of Claims 1 to 8, in which an attachment means attaches the guide rail (27) to the transmission casing (1), the blocking means blocks movement of the guide rail in a direction perpendicular to the plane.

10. Blocking mechanism according to one of Claims 1 to 9, in which the guide rail is made as a single piece from a bent metal strip.

11. Transmission system comprising a shaft having at least one locking recess (45) and a blocking mechanism according to any one of Claims 1 to 10.

12. Motor vehicle comprising a transmission system according to Claim 11.
